Europäisches Patentamt

European Patent Office

Office européen des brevets

(11) Publication number: **0 110 303**
**A2**

(19)

(12) # EUROPEAN PATENT APPLICATION

(21) Application number: **83111677.7**

(22) Date of filing: **22.11.83**

(51) Int. Cl.³: **B 60 T 11/10**

(30) Priority: **24.11.82 JP 206563/82**

(43) Date of publication of application: **13.06.84**
**Bulletin 84/24**

(84) Designated Contracting States: **DE FR GB**

(71) Applicant: **NISSAN MOTOR COMPANY, LIMITED, No.2,**
**Takara-cho, Kanagawa-ku, Yokohama-shi**
**Kanagawa-ken 221 (JP)**

(72) Inventor: **Kubota, Hitoshi, 107-2, Mitake,**
**Minamiashigara-shi Kanagawa-ken (JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath,**
**Maximilianstrasse 58, D-8000 München 22 (DE)**

(54) **Brake system for vehicle.**

(57) A hydraulic brake system wherein a brake-holding
mechanism applies pressure fluid from hydraulic pressure
source to brake actuators. The brake-holding mechanism
have a valve element and a preventing means for prevent-
ing the valve element from seating on a valve seat so as to
permit pressure always to be released from the brake ac-
tuator toward the hydraulic pressure source when detecting
means detects the backward travel of a vehicle.

PATENTANWÄLTE
GRÜNECKER · DR. KINKELDEY · DR. STOCKMAIR
DR. SCHUMANN · JAKOB · DR. EFFLD · MEISTER
HILGERS · DR. MEYER · PLATH

-1-

TITLE OF THE INVENTION

Brake System for Vehicle

BACKGROUND OF THE INVENTION

This invention relates to a hydraulic brake system for a vehicle having a valve mechanism adapted to facilitate starting of the vehicle on an upward slope, and more specifically to such a brake system provided with an alarm circuit for alarming the operation of the hydraulic brake system.

Conventionally, there has been known a hydraulic brake system which serves to facilitate restarting of a vehicle on an upward slope after the vehicle is stopped, and examples of such a brake system is disclosed in a Japanese Utility Model Public Disclosure Nos. 56-83557 and 55-43905 in which hydraulic brake pressure is trapped or blocked to maitain a constant brake force only when a clutch pedal is depressed to place a clutch into a disengaged condition, whereas the clutch pedal is returned to release the blocked brake pressure for deactuation of the brake.

In such prior art systems, it is by retuning the clucch pedal that the blocked brake pressure is released, the reasons of which are as follows: Namely, if the blocked brake pressure is released by depression of an accelerator pedal, the release of the brake always takes place at a constant position of the depressed acceleration pedal so that engine torque becomes constant every time the brake is released, thus resulting in the engine torque too less or larger than that to be outputed corresponding to the gradient of the slope. On the other hand, returning of the clutch pedal is desirably done when the accelerator pedal has been pushed down to a position suitable for the gradient of the slope.

With the conventional brake system as described above, however, it is constructed such that blocking of brake fluid is released by returing of the clutch pedal. Therefore, it is easy to restart the vehicle on an upward slope but on the other hand, there arises the following inconvenience when the vehicle is moved backward. Namely, if the vehicle is to be stopped at a desired place by its backward travel, usually, the brake pedal is depressed for vehicle deceleration and at the same time, the clutch pedal is pushed down to place the clutch into a half-engaged condition. In this state, the body of the vehicle is decelerated but a valve element such as a ball is caused under inertial effects to move backwardly of the vehicle, i.e. in the direction toward a valve seat. Consequently, should the clutch pedal be pushed down during depression of the brake pedal, hydraulic brake pressure, existing in a wheel cylinder immediately before the clutch pedal is pushed down, is blocked or confined therein so that, even if the brake pedal is returned to decrease the brake force, the hydraulic brake pressure in the wheel cylinder remains blocked or confined, thus holding the brake force unchanged. As a result, the vehicle is stopped before reaching the desired place.

SUMMARY OF THE INVENTION

In view of the above, it is an object of the present invention to provide a hydraulic brake system for a vehicle of the character as described which is capable of avoiding the situation in which during backward travel of a vehicle either on an upward slope or on a flat road surface, the vehicle is stopped before reaching the intended place due to the impaired steering operation caused by the action of a brake-holding valve mechanism.

The above and other object, features and advantages of the present invention will became apparent from the following detailed description of a preferred embodiment of the invention when taken in conjunction with the accompanying drawings.

BRIEF DESCRIPTION OF THE DRAWINGS

Fig. 1 is an overall view, in partial section, of a hydraulic brake system having a valve mechanism for facilitating starting of a vehicle on an upward slope accroding to the present invention; and

Fig. 2 is a cross sectional view taken along line II-II of Fig. 1.

# DETAILED DESCRIPTION OF THE PREFERRED EMBODIMENT

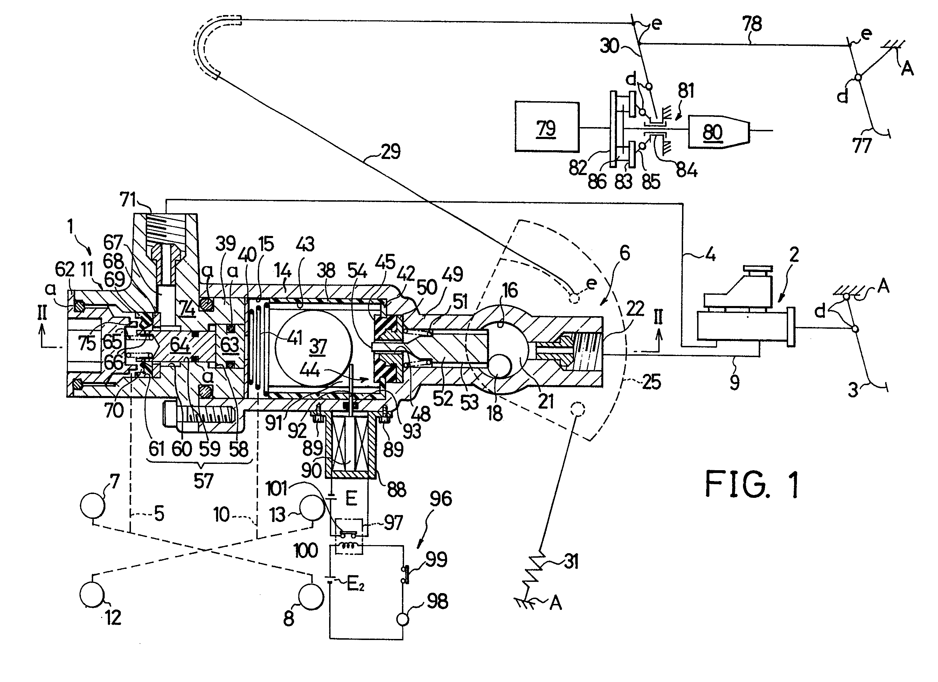

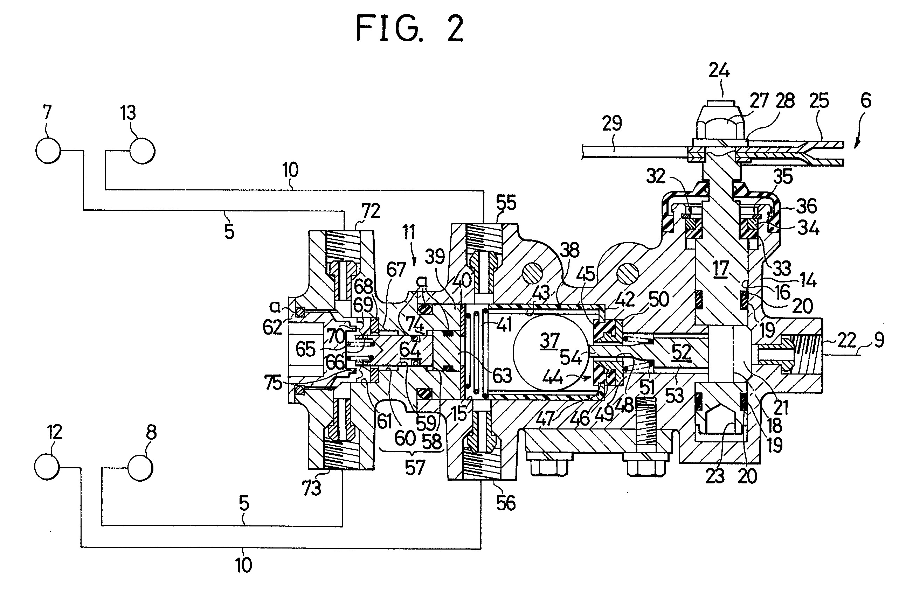

Referring to Fig. 1 and 2, there is shown a hydraulic brake system of the present invention generally designated at reference numeral 1, which includes a tandem brake master cylinder 2 having a pair of independent hydraulic pressure-generating chambers (not shown) defined therein.

The master cylinder 2 is mounted on the body A of a vehicle and adapted to be operated by a brake pedal 3 which is swingably attached to the vehicle body A. One of the hydraulic pressure-generating chambers of the master cylinder is connected to a wheel cylinder (not shown) of a brake actuator 12 for a left-side front wheel and to a wheel cylinder (not shown) of a brake actuator 13 for a right-side rear wheel by way of a conduit 9, a brake-holding valve mechanism 6 and a conduit 10, whereas the other hydraulic pressure-generating chamber of the master cylinder is connected to a wheel cylinder (not shown) of a brake actuator 7 for a right-side front wheel and to a wheel cylinder (not shown) of a brake actuator 8 for a left-side rear wheel by way of a conduit 4, a valve assembly 11 formed integral with the brake-holding valve mechanism 6 and a conduit 5.

As clearly shown in Fig. 2, the brake-holding valve mechanism 6 has a first valve body 14 defining therein a stepped bore 15 having a plurality of diameters increasing in the forward direction of the vehicle, and a bore 16 perpendicular to the stepped bore 15. In this connection, it is to be noted that in Figs. 1 and 2, the forward direction of the vehicle is to the left side with reference to the drawings.

Rotatably fitted in the bore 16 is a cam shaft 17 which has an eccentric cam 18 of a reduced diameter formed at an intersection between the stepped bore 15 and the bore 16. The cam shaft 17 has a pair of journal portions of the same diameter on the opposite sides of the cam 18, and a sealing member 19 and a back-up ring 20 are fitted around the outer periphery of each of the journal portions for sealing purposes. Defined in the bore 16 between the journal portions is a cam chamber 21 which

-4-

forms a part of the brake fluid supplying passage and which is connected to a conduit 9 through a threaded connection bore 22.

The cam shaft 17 is formed at its inner end with a recess 23 so as to enlarge the volume of a space defined in the bore 16 between the cam shaft inner end and the opposed closed end of the bore 16, and on the other hand, at its outer end with a mounting portion 24 of a reduced diameter projecting outwardly from the open end of the bore 16. Fixedly mounted on the mounting poriton 24 by means of a nut 27 and a washer 28 is a rotary member 25 in the form of a substantially triangular configuration.

Referring to Fig. 1, the rotary member 25, which is schematically shown by broken lines with its detailed shape and construction omitted, is connected at its one side with a clutch-operating arm 30 through a wire 29 and at its other side with the vehicle body through a release spring 31 so that it is caused to rotate along with the cam shaft 17 by or against the tension of the release spring 31 in response to the swinging movements of the clutch-operating arm 30.

The cam shaft 17 is prevented from falling off from the bore 16 and at the same time slidably guided in its rotary motion by means of a slide assembly 32 which is provided at the open end of the bore 16. The slide assembly 32 comprises a slide member 33 in the form of a flanged cylinder made of a synthetic resin of low friction and slidably receiving therein the cam shaft 17, an annular backup member 34, and an annular stop 35. A water and dust preventing boot 36 is attached on the first valve body 14 surrounding the cam shaft 17.

On the other hand, fitted in the stepped bore 15 is a sleeve-shaped ball guide 38 having a ball valve element 37 movably received therein, the ball guide 38 being held in abutment with a stepped shoulder 42, as shown in Fig. 2, by means of a spring 41 and a second valve body 39. The second valve body 39 is sealingly fitted in the open end of the stepped bore 15 and fixed to the first valve body 14 by means of a plurality of bolts threaded thereto, and constitutes a housing of the brake holding

0110303

-5-

valve together with the first valve body 14 and a spring 41. The spring 41 is arranged under compression between the ball guide 38 and a spring retainer 40 abuttingly supported on the second valve body 39. The ball guide 38 is formed at its inner peripheral surface with a number of axially extending grooves 43. A valve seat assembly 44, on which the valve element 37 is adapted to be seated, is fitted in that end of the ball guide 38 which is adjacent the stepped shoulder 42 in the stepped bore 15.

The valve seat assembly 44 comprises a seat member 45 of rubber and a support member 46 mounting thereon the seat member 45 in concave-convex engagement, the seat member having at its outer periphery a groove 47 into which an inwardly projected annular end wall of the ball guide 38 is fitted for integrally attaching the valve seat asembly 44 thereto. Though not shown in the drawings, the valve seat member 45 is formed at its outer periphery with an annular projection for sealing between the seat memeber 45 and the inner surface of the stepped bore 15 at its medium diameter portion, and the support member 46 has a bore 48 formed therethrough and a radially outwardly extending annular plate 50 adapted to be in abutting engagement with a stepped shoulder 49 in the stepped bore 15.

In a small diameter portion of the stepped bore 15, there is fitted a plunger 52 for axial sliding movement with a light spring 51 being disposed under compression between the support member 46 of the valve seat assembly 44 and the plunger 52 so as to urge the right-side end of the plunger 52 into abutting engagement with the cam 18. The plunger 52 is formed at its outer periphery with a multitude of axial groove 53 and at its left-side end with an integral rod 54 of a reduced diameter, which projects through the bore 48 in the valve seat assembly 44 into the interior space of the ball guide 38 for abutting engagement with the ball valve element 37.

The large diameter portion of the stepped bore 15, in which the ball guide 38 is fitted, is connected at a pair of outlet ports 55, 56 formed in the first valve body 14 with the pair of fluid lines 10.

The valve assembly 11 includes the second valve body 39 defining therein a stepped bore 57 which has a first medium-diameter bore section 58, a small-diameter bore section 59, a second medium-diameter bore section 60 and a large-diameter bore section 61 arranged in series from the right to the left side in the drawings. The large-diameter bore section 61 is closed at one end thereof by a plug member 62 sealingly threaded into the second valve body 39. Of these bore sections, in the first medium-diameter bore section 58, there is closely fitted a piston 63 of a relatively large diameter for sliding movement relative thereto, the piston 63 being adapted to receive at its right-side end face the fulid pressure in the stepped bore 15.

Also, slidably fitted in the small-diameter bore section 59 is a plunger 64 of a relatively small diameter which is in abutting engagement at its right-side end with the piston 63.

Further, the plunger 64 has a left-side end in the form of a cylinder with an axial recess formed therein, and a spring 65 of a relatively weak set load is disposed under compression between the recessed cylindrical end of the plunger 64 and the plug member 62 so as to urge the plunger 64 in the direction toward the pistion 63. The cylindrical end of the plunger 64 has a plurality of small radial apertures 66, and a cup-shaped sealing member 69 is disposed between the outer periphery of the plunger 64 and the inner surface of the large-diameter bore section 61 and supported by back-up member 68 which abuts against a stepped shoulder 67 between the large-diameter bore section 61 and the second medium-diameter bore section 60. The sealing member 69 has an inner lip 70 which is brought under its own resiliency into close contact with the outer peripheral surface of the cylindrical end of the plunger 64. As shown in Fig. 1, the portion of the stepped bore 57 on the right side of the sealing member 69 is connected at an inlet port 71 with a fluid line 4 leading to the first pressure-generating chamber (not shown ) of the master cylinder 2, whereas as shown in Fig. 2, the portion of

0110303

-7-

the stepped bore 57 on the left side of the sealing member 69 is connected at a pair of outlet ports 72, 73 with the fluid lines 5 leading to the respective wheel cylinders of the left-side front and the right-side rear brake actuators 7, 8.

The piston 63 in the stepped bore 57 is movable to the left until it abuts against the stepped shoulder 74 between the small-diameter bore section 59 and the first medium-diameter bore section 58, and when the piston 63 abuts against the stepped shoulder 74, the plunger 64 takes a position in which the small apertures 66 in the cylindrical end portion of the plunger 64 are located on the left side of the inner lip 70 of the sealing member 69. In order to restrict the axial movement of the sealing member 69, an annular stop 75 is integrally formed with and projects axially inwardly from an inner end of the plug member 62.

In Figs. 1 and 2, a clutch pedal 77, a clutch wire 78 provided for connecting between the clutch pedal 77 and the clutch-operating arm 30, an engine 79, a transmission 80, and a clutch 81 including the clutch-operating arm 30 are also illustrated. These are schematically illustrated for simplification of the description.

The clutch 81 comprises a flywheel 82 rotatable integrally with the engine 79, a pressure plate 83, a release bearing 84 slidable on a shaft in response to swinging motions of the clutch-operating arm 30, a diaphragm spring 85 disposed between the pressure plate 83 and the release bearing 84, and a plurality of clutch discs 86 arranged between the flywheel 82 and the pressure plate 83 and adapted to be placed into or out of frictional engagement with both of them. Such a clutch is well known in the art and will not be described hereinafter in detail.

Also illustrated in Figs. 1 and 2 are a seal $\underline{a}$ which may be used or omitted in accordance with the mounting part thereof; a center $\underline{d}$ around which the brake pedal 3 or the clutch pedal 77 is swung or pivoted; and connecting points $\underline{e}$ at which the wires 29, 78 are connected with the rotary member 25, the clutch-operating arm 30 or the clutch pedal 77.

The valve mechanism as constructed in the above manner is provided with a means for preventing the ball valve element 37 from seating on the valve seat 45 during backward travel of the vehicle. Specifically, as shown in Fig. 1, a housing 88 is secured by screws 89 to one side of the first valve body mechanism 14 and receiving therein a solenoid 90. The solenoid 90 has a plunger 91 which is disposed at its central or core portion and is caused to slide in the axial directions toward or away from the ball valve element 37 in response to energization or deenergization of the solenoid 90. The plunger 91 slidably extends through a radial bore 92 formed through the side wall of the ball guide 38 and the first valve body 14 for forward and rearward movements so that the tip end of the plunger 91 is projected into a space between the ball valve element 37 in the ball guide 38 and the valve seat 45 of the valve seat assembly 45 upon forward movement of the plunger 91. A seal 93 is provided in the radial bore 92 for sealing between the outer surface of the plunger 91 and the inner surface of the bore 92. In this manner, the solenoid 90 and the plunger 91 jointly constitute a means for preventing trapping or blocking of the brake fluid presssure.

The solenoid 90 is connected to a reverse lamp circuit 96 of the vehicle which serves to detect the backward travel of the vehicle. The reverse lamp circuit 96 comprises an electromagnetic relay 97, a reverse lamp 98, a normally closed switch 99 adapted to be closed when a shift lever (not shown) is moved to a reverse position and sources of electric power E1, E2.

In operation, let us first consider the case in which the driver operates a vehicle to run at an appropriate speed without effecting braking and clutching operations.

In such a driving condition, the clutch discs 86 are forced under the action of the utmost load of the diaphragm spring 85 into frictional engagement with both the flywheel 82 and the pressure plate 83 and thus placed into a so-called clutch-engaged condition so that the cam shaft 17 is biased under the tension of the release spring 31 toward the position illustrated in the drawings to cause the plunger 52 to move to the left through the section of the cam 18. In this state, the small-diameter rod portion 54 of the plunger 52 is in a position to project through the bore 48 in the valve seat assembly 44 into the hollow interior of the ball guide 38, thus positively preventing the ball valve element 37 from seating on the valve seat 45 even when the vehicle travels on an upward slope. Also, because of no brake application, there is no pressurization of brake fluid in the respective brake lines or conduits and hence the piston 63 and the plunger 64 are displaced to the right under the biasing force of the spring 65 so that the chambers defined in the stepped bore 57 on the opposite sides of the sealing member 69 are in fluid communication with each other through the small apertures 66 in the cylindrical end portion of the plunger 64.

In the above condition, assuming that the vehicle comes to, for instance, a crossing during travel on an ascending road and the driver pushes down on the brake pedal 3 for brake application, pressurized brake fluid is delivered from the master cylinder 2 into the conduits 4, 9 to generate high pressure in the respective fluid lines 5, 10 so that the wheel cylinders of the respective brake actuators 7, 8, 12 and 13 are supplied with pressure fluid to initiate application of the brakes. In this connection, it is to be noted that the left-side front and the right-side rear brake actuators 12, 13 are supplied with pressure fluid from the master cylinder 2 by way of the conduit 9, the cam chamber 21, the groove 53 in the plunger 52, the bore 48 in the valve seat assembly 44, the hollow interior of the ball guide 38 and the conduit 10, whereas the right-side front and the left-side rear brake actuators 7, 8 are supplied with pressure fluid from the master cylinder 2 by way of the conduit 4, the stepped bore 57 and the conduit 5. Thus, one pair of the diagonally disposed wheel cylinders 7, 8 and the other pair of diagonally disposed wheel cylinders 12, 13 are independent of each other.

In this case, since the master cylinder 2 delivers brake fluid at substantially equal pressures to the conduits 4, 9 and the pressure-receiving area at the right-side end of the piston 63 is larger than that at the left-side end of the plunger 64, the force which is generated by fluid pressure acting on the right-side end face of the piston 63 and which tends to move the piston 63 to the left overcomes the sum of the biasing force of the spring 65 and the force which is generated by fluid pressure acting on the left-side end face of the plunger 64 and which tends to move the plunger 64 to the right, so that the piston 63 is caused to move to the left until it abuts against the stepped shoulder 74 between the first medium-diameter bore section 58 and the small-diameter bore section 59. As a result, the plunger 64 is forced to displace to the left to such an extent that the seal apertures 66 in the cylindrical end portion thereof come to the left side of the inner lip 70 of the sealing member 69, thus preventing the return or back flow of pressure fluid in the direction from the conduit 5 toward the conduit 4.

Thereafter, the inner lip 70 of the sealing member 69 is elastically deformed under a pressure differential on the opposite sides thereof to permit a unidirectional flow of pressure fluid from the conduit 4 toward the conduit 5 through a clearance formed between the outer peripheral surface of the plunger 64 and the inner lip 70.

Subsequently, high pressure enough to stop the vehicle on a slope is transmitted to the respective brake actuators 7, 8, 12 and 13 to decelerate the vehicle, and when the speed of the vehicle is reduced sufficiently, the driver pushes down deeply on the clutch pedal 77 while depressing the brake pedal 3 so that the clutch pedal 77 is forced to swing or pivot about the fulcrum d on the clutch pedal 77 therby to cause swinging motion of the clutch-operation arm 30 about the fulcrum d in the clockwise diection through the clutch wire 78. This causes the leftward movement of the release bearing 84 whereby the diaphragm spring

-11-

85 is flexed about the fulcrum d to deform the pressure plate 83 in a direction away from the flywheel 82 so that the clutch discs 86 are completely brought out of frictional engagement with both the pressure plate 83 and the flywheel 82, thus rendering the clutch 81 in a so-called disengaged or cut-off condition. On the other hand, simultaneously with this, the swinging movement of the clutch-operating arm 30 serves to pull the wire 29, causing the rotary member 25 of the brake-holding valve mechanism 6 to turn in the counterclockwise direction in Fig. 1 against the biasing force of the release spring 31 so that the cam shaft 17 is thereby rotated to displace the plunger 52 to the right under the action of the spring 51 through the camming engagement of the cam 18 on the cam shaft 17 with the plunger 52, thus moving the small-diameter rod portion 54 rightwardly into the bore 48 in the valve seat assembly 44 so as to permit the ball valve element 37 to seat on the valve seat 45.

In such a condition, when the driver takes his foot off from the brake pedal 3 after complete stoppage of the vehicle, pressure in the conduit 9 upstream of the ball valve element 37 now seated on the valve seat 45 is released while pressure in the conduit 10 downstream of the ball valve element 37 is held as it is.

Further, although in the valve assembly 11, there is a pressure drop in the conduit 4, the piston 63 is held displaced to the left because high pressure in the large-diameter bore portion of the stepped bore 15 on the side of the conduit 10 still acts on the right-side end face of the piston 63, and hence the inner lip 70 of the sealing element 69 continues to prevent transfer of pressure fluid from the conduit 5 toward the conduit 4, as referred to before, thus maintaining the high pressure in the conduit 5.

Accordingly, high pressure is continuously held in the respective wheel cylinders (not shown) of the brake actuators 7, 8, 12 and 13 so that when the clutch pedal 77 is in a depressed state with the brake pedal 3 released, there is obtained a brake force strong enough to keep the vehicle stopped on a slope.

On the other hand, when the accelerator pedal (not shown) is stepped in for starting the vehicle on an upward slope while releasing the clutch pedal 77, the clutch-operating arm 30 is forced to swing in the opposite direction or in the counterclockwise dirction so that the clutch discs 86 are brought into frictional engagement with both the flywheel 82 and the pressure plate 83 under the action of part of the utmost load of the diaphragm spring 85. Also, in the brake-holding valve 6, the rotary member 25 and the cam shaft 17 are turned in the clockwise direction by the biasing force of the release spring 31 to displace the cam 18 on the cam shaft 17 and hence the plunger 52 to the left so that the rod portion 54 of the plunger 52 is brought into abutting engagement with the ball valve element 37 to move it away from the valve seat 45, thereby releasing the pressure in the conduit 10 toward the conduit 9. As the pressure in the conduit 10 and hence in the large-diameter bore portion of the stepped bore 15 is reduced, the force acting on the right-side end face of the piston 63 is decreased to permit the piston 63 and the plunger 64 to be moved to the right due to the combined action of the biasing force of the spring 65 and the pressure in the large-diameter bore section 61 of the stepped bore 57 until the small apertures 66 in the cylindrical end portion of the plunger 64 are placed to the right of the inner lip 70 of the sealing member 69. With the rightward movement of the plunger 64, the pressure in the conduit 5 is gradually released through the small apertures 66 into the conduit 4 whereby pressure in the respective wheel cylinders of the brake actuators 7, 8, 12 and 13 is lowered gradually to reduce the brake forces applied to the respective wheel so as to permit starting of the vehicle.

Now, description will be made of the case in which the vehicle is moved backward so as to be stopped at a desired place. Assuming that the driver pushes down deeply on the clutch pedal 77 and moves the shift lever (not shown) into a reverse position, the switch 99 in the reverse lamp circuit 96 is closed in response to the movement of the shift lever into the reverse position to turn on the reverse lamp 98 and at the same time to energize the electromagnetic coil 100 of the electromagnetic relay 97 therby to close the contacts 101. Upon closure of the contacts 101, the solenoid 90 mounted on the brake-holding valve mechanism 6 is energized to move the plunger 91 forward or upward in Fig. 1 so that the tip end of the plunger 91 is projected into the spacer between the ball valve element 37 and the valve seat member 45, as clearly shown in Fig. 1, to unseat the ball valve element 37 from the valve seat 45. In this state, when the accelerator pedal (not shown) is depressed and the clutch pedal is returned, the vehicle starts to move backward, and when a desired location is reached, the brake pedal 3 is pushed down to decelerate the vehicle and then the clutch pedal 77 is depressed at an appropriate time. On this occasion, though the rod portion 54 of the plunger 52 is caused by the biasing force of the spring 51 to move rightwardly into the bore 48 in the valve seat assembly 44, the tip end of the plunger 91, projected into the hollow interior of the ball guide 38, acts to hold the ball valve element 37 away from the valve seat 45 so that pressure in the conduit 10 is released into the conduit 9 through the now opened bore 48 in the valve seat assembly 44. As a consequence, pressures of brake fluid supplied to the conduits 5, 10 are varied in accordance with the magnitude of the depressing force on the brake pedal 3 so as to effectively avoid the situation in which the vehicle is stopped against the driver's will by traping or confinement of brake fluid in the wheel cylinders.

Subsequently, when the shift lever (not shown) is shifted from the reverse position to another position, the switch 99 is opened to stop the flow of current through the reverse lamp circuit 96 whereby the contacts 101 of the electromagnetic relay 97 returns to an original open condition to deenergize the solenoid 90 so that the plunger 91, projected into the space between the ball valve element 37 and the valve seat 45 to

-14-

prevent seating of the ball valve element 37 on the valve seat 45, is returned from its projected position to its original retracted position to render the brake-holding valve mechanism 6 and the valve assembly 11 ready for operation.

Incidentally, it should be understood that in the embodiment as described, though the reverse lamp circuit 96 is employed as a means for detecting the backward travel of a vehicle, it may be possible to detect the rotating direction of a wheel for the same purpose, and similarly, in place of the ball valve element 37, the plunger 91 of the solenoid 90 may be utilized as a means for preventing trapping or confinement of brake fluid in the wheel cylinders, or there may be provided a passage which bypasses the ball valve element 37 and which is opened or closed by means of a valve disposed therein. Of course, the means for preventing trapping or confinement of brake fluid need not be an electrically operated one but instead may be mechanically operated one operatably connected with the above-mentioned detecting means.

WHAT IS CALIMED IS:

(1)  A brake system for use in a vehicle having of a source of hydraulic pressure, brake actuators connected to said source of hydraulic pressure through fluid lines and adapted to be supplied with pressure fluid from said hydraulic pressure source for applying a brake force to a wheel of said vehicle and a brake-holding valve mechanism disposed in said fluid line,

said brake-holding valve mechanism comprising;

a housing,

a valve element received in said housing,

a valve seat on which said valve elementis is adapted to be seated, said pressure fluid adapted to be held in said brake actuators when said valve element is seated on said valve seat,

a means for unseating said valve element from said valve seat when a clutch pedal is released,

a detecting means for detecting backward travel of the vehicle, and

a means for providing flow communication between said brake actuators and said hydraulic pressure source when said detecting means detects the backward travel of said vehicle independently of the position of said clutch pedal.

(2)  The brake system for use in a vehicle claimed in claim 1, wherein, said valve element is a ball shaped element which is movably received in a sleeve-shaped ball guide which is provided with said valve seat in the end thereof.

(3)  The brake system for use in a vehicle claimed in claim 2, wherein, said valve seat has a bore formed therethrough in which a plunger is provided and the projection of said plunger into said ball guide prevents said valve element from seating of said valve seat, said plunger being actuated in response to the movement of said clutch pedal.

(4)  The brake system for use in a vehicle claimed in claim 3, wherein, said providing means comprising a means for proventing said valve element from seating on said valve seat.

-16-

(5) The brake system for use in a vehicle claimed in claim 4, wherein, said preventing means comprising a plunger and a means for forcing said plunger to project into said ball guide between said valve element and valve seat.

(6) The brake system for use in a vehicle claimed in claim 5, wherein, said forcing means is a solenoid which accepts said plunger therein.

(7) The brake system for use in a vehicle claimed in claim 1, wherein, said valve element and valve seat being adapted to operate wheel cylinders of the left-side front and the right-side rear brake actuators, and another valve means is provided to operate wheel cylinders of the right-side front and the left-side rear brake actuators such that said another valve means permits pressure to be released from said brake actuators to said source of hydraulic pressure when said valve element is prevented from seating on said seat.

FIG. 1

1/2

0110303

# FIG. 2